(19) Europäisches Patentamt / European Patent Office / Office européen des brevets

(11) **EP 3 349 074 B1**

(12) **EUROPEAN PATENT SPECIFICATION**

(45) Date of publication and mention
of the grant of the patent:
**09.02.2022  Bulletin 2022/06**

(21) Application number: **17196776.3**

(22) Date of filing: **17.10.2017**

(51) International Patent Classification (IPC):
**G05B 11/42** *(2006.01)*

(52) Cooperative Patent Classification (CPC):
**G05B 11/42;** G05B 2219/42033

(54) **CONTROL DEVICE, CONTROL METHOD, AND CONTROL PROGRAM FOR TUNING AN AMOUNT OF OPERATION OF A DEVICE**

STEUERUNGSVORRICHTUNG, STEUERUNGSVERFAHREN UND STEUERUNGSPROGRAMM ZUR ABSTIMMUNG EINER BEDIENUNGSGRÖSSE EINES GERÄTS

DISPOSITIF DE COMMANDE, PROCÉDÉ DE COMMANDE ET PROGRAMME DE COMMANDE POUR AJUSTER UNE QUANTITÉ D'ACTIONNEMENT D'UN DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.01.2017   JP 2017003833**

(43) Date of publication of application:
**18.07.2018   Bulletin 2018/29**

(73) Proprietor: **Omron Corporation**
**Kyoto-shi, Kyoto 600-8530 (JP)**

(72) Inventors:
• **YAMADA, Takaaki**
**Kyoto-shi, Kyoto 600-8530 (JP)**
• **TANAKA, Hitoshi**
**Kyoto-shi, Kyoto 600-8530 (JP)**
• **TSUBATA, Hajime**
**Kyoto-shi, Kyoto 600-8530 (JP)**
• **YANO, Keisuke**
**Kyoto-shi, Kyoto 600-8530 (JP)**
• **HASUI, Ryosuke**
**Kyoto-shi, Kyoto 600-8530 (JP)**

(74) Representative: **Becker & Kurig Partnerschaft Patentanwälte PartmbB Bavariastraße 7 80336 München (DE)**

(56) References cited:
**EP-A1- 0 445 940      US-A- 4 754 391
US-A1- 2014 121 853**

**Description**

Field of the Invention

The invention relates to a tuning technique of tuning an amount of operation of a target device which is used for temperature control, motor control, or the like.

Description of Related Art

In the related art, PID control is often used as a technique of controlling a current value such that the current value matches a target value in a control system device such as a temperature controller. Various techniques for the PID control are known as described in Non-patent Document 1. Two-degree-of-freedom PID control is known as one technique for the PID control. For example, Patent Document 2 describes a two-degree-of-freedom PID control system of a target value filter which determines a manipulated value to be output to a control target so that a process value obtained from the control target matches a target value.

In the two-degree-of-freedom PID control, a target value filter and a PID control part are provided. A proportional band Pb, an integral time Ti, and a differential time Td are set for the PID control part, and filter coefficients $\alpha$ and $\beta$ are set for the target value filter.

In the technique according to the related art, the filter coefficients $\alpha$ and $\beta$ are determined depending on linear characteristics of a control target device and are set to fixed values.

[Prior Art Documents]

[Non-Patent Document 1] "System Control Information Library PID control," Nobuhide Suda, p. 98 - p. 101

[Patent Document 2] US 2014/121853 A1

SUMMARY OF THE INVENTION

However, in the technique according to the related art, an effect of suppression of a degree of overshooting at the time of response to a target value may decrease or a settling time therewith may extend. Alternatively, the settling time may extend due to excessive filtering.

Therefore, an object of the invention is to suppress a degree of overshooting at the time of response to a target value and to shorten a settling time. Another object is to perform tuning such that excessive filtering more than necessary is not performed and to shorten a settling time.

A control device according to the invention includes a setting part, a target value filter, and a PID control part, according to independent claim 1.

The setting part sets a PID value including a proportional band and an integral time and filter coefficients $\alpha$ and $\beta$ of two-degree-of-freedom PID control. The target value filter calculates an internal target value from a target value of control using the filter coefficients $\alpha$ and $\beta$. The PID control part calculates an amount of operation for control using the PID value with the internal target value as an input. The setting part sets the filter coefficients $\alpha$ and $\beta$ using the target value, an initial value at the start time of control of the target value, and the proportional band.

According to this configuration, since the internal target value is set to a value associated with characteristics of the PID control, it is possible to improve stability of the PID control.

In the control device according to the invention, the setting part sets the filter coefficient $\alpha$ using the target value, the initial value, the proportional band and an integral time.

According to this configuration, it is possible to improve initial tracking characteristics and a degree of overshooting.

In the control device according to the invention, the setting part sets the filter coefficient $\beta$ using the target value, the initial value, and a ratio of the proportional band and the integral time.

According to this configuration, it is possible to further improve initial tracking characteristics and a degree of overshooting.

In the control device according to the invention, the setting part may set the filter coefficient $\beta$ additionally using a system gain.

According to this configuration, it is possible to further improve initial tracking characteristics.

According to the invention, it is possible to suppress a degree of overshooting at the time of response to a target value and to shorten a settling time.

BRIEF DESCRIPTION OF THE DRAWINGS

Fig. 1 is a functional block diagram of a temperature control system including a temperature control device according to a first embodiment of the invention;
Fig. 2 is a graph illustrating temperature control characteristics when a temperature control technique according to the first embodiment of the invention is used;
Fig. 3 is a flowchart illustrating a temperature control method according to the first embodiment of the invention; and
Fig. 4 is a functional block diagram of a temperature control system including a temperature control device according to a second embodiment of the invention.

DESCRIPTION OF THE EMBODIMENTS

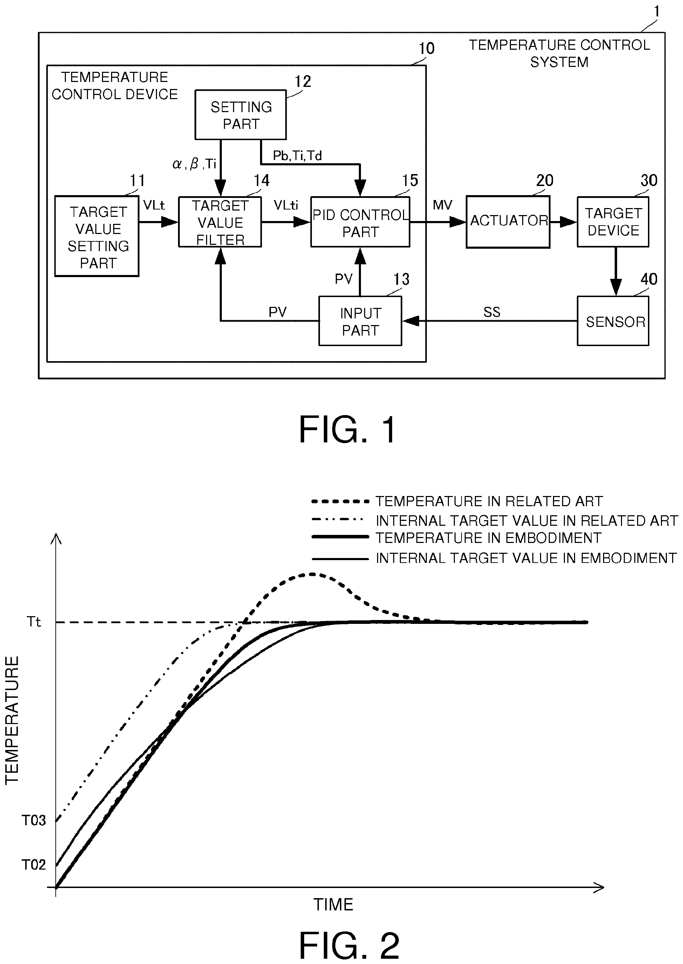

A temperature control device, a temperature control method, and a temperature control program according to a first embodiment of the invention will be described below with reference to the accompanying drawings. In the following embodiments, a case in which a temperature of a heater or the like is controlled (temperature control) is described as a specific example, but the invention can be applied to control of other physical quantities such as rotation control of a motor. Fig. 1 is a functional block diagram of a temperature control system including a temperature control device according to a first embodiment of the invention.

As illustrated in Fig. 1, a temperature control device 10 includes a target value setting part 11, a setting part 12, an input part 13, a target value filter 14, and a PID control part 15. Roughly, the temperature control device performs two-degree-of-freedom PID control and outputs an amount of operation MV.

First, a temperature control system 1 including the temperature control device 10 will be described below.

The temperature control system 1 includes a temperature control device 10, an actuator 20, a target device 30, and a sensor 40. The target device 30 includes, for example, a heater (not illustrated). The actuator 20 is, for example, an SSR, an electromagnetic switch, or a power adjuster. The actuator 20 operates based on an amount of operation MV from the temperature control device 10 and controls supply of electric power to the heater of the target device 30. The sensor 40 includes, for example, a thermocouple, measures a temperature of the target device 30, and outputs measurement data SS. The measurement data SS is input to the input part 13 of the temperature control device 10.

Specific details of the temperature control device 10 will be described below.

The input part 13 calculates a measured value PV base on the measurement data SS. The measured value PV has the same part as a target value VLt which will be described later. For example, when the target value VLt is in degrees Celsius (°C), the measured value PV is also in degrees Celsius (°C).

The target value setting part 11 sets a target value VLt. The target value VLt is set by an operator or the like. When the target value setting part 11 includes storage means of the target value VLt, the stored target value VLt may be used. The target value VLt is, for example, a temperature. The target value setting part 11 outputs the target value VLt to the target value filter 14.

The setting part 12 sets a PID value and filter coefficients $\alpha$ and $\beta$ in two-degree-of-freedom PID control. The PID value includes a proportional band Pb, an integral time Ti, and a differential time Td.

The setting part 12 performs automatic tuning such as a limit cycle method and sets the PID value based on temperature waveform information. Specifically, the setting part 12 calculates a waste time L based on a limit cycle period Tc and calculates the integral time Ti and the differential time Td based on the waste time L. The setting part 12 calculates the proportional band Pb based on a limit cycle amplitude.

The setting part 12 sets the filter coefficients $\alpha$ and $\beta$ using the following expressions.

$$\alpha = k11 + k12 \times (\Delta SP \times SV\alpha)^{\wedge}n1 \qquad \ldots\text{(Expression 1)}$$

$$\Delta SP = VLt - VLs \qquad \ldots\text{(Expression 2)}$$

In Expression 1, k11, k12, and n1 are coefficients of real numbers. n1 is a positive real number. For example, k11=-0.36, k12=0.052, and n1=0.2 are defined.

$SV\alpha$ is a value which is calculated based on the proportional band Pb and the integral time Ti. "^" represents a multiplier. In Expression 2, VLt denotes the above-mentioned target value, and VLs denotes an initial value. The initial value can be acquired based on the measured value PV at the start time of temperature control.

In this way, the filter coefficient $\alpha$ is set using the target value VLt, the initial value VLs, the proportional band

Pb, and the integral time Ti.

$$\beta = k21 \times (\Delta SP/Pb \times SV\beta)^{\wedge}n2 \qquad \ldots (\text{Expression 3})$$

In Expression 3, k21 and n2 are coefficients of real numbers. n2 is a positive real number. For example, k21=0.77 and n2=0.1 are defined.

$SV\beta$ is a value which is calculated based on one of an ON duty of the actuator 20, a characteristic value, a system gain, and a regular amount of operation. The ON duty T' is determined by an ON time Ton and an OFF time Toff of the supply of electric power to the target device 30 and is calculated by T'=(Ton+Toff)/Ton. The characteristic value is a value which is proportional to a ratio of the proportional band Pb and the integral time Ti. "^" denotes a multiplier. $\Delta SV$ in Expression 3 is acquired from Expression 2.

In this way, the filter coefficient $\beta$ is set using the target value VLt, the initial value VLs, and the proportional band Pb.

The setting part 12 outputs the filter coefficients $\alpha$ and $\beta$ and the integral time Ti to the target value filter 14. The setting part 12 outputs the proportional band Pb, the integral time Ti, and the differential time Td to the PID control part 15. That is, the setting part 12 outputs the PID value to the PID control part 15.

The input part 13 outputs the calculated measured value PV to the target value filter 14 and the PID control part 15.

The target value filter 14 calculates an internal target value VLti from a calculation expression of the target value filter of the existing two-degree-of-freedom PID control using the target value VLt, the filter coefficients $\alpha$ and $\beta$, and the integral time Ti. Specifically, the internal target value VLti is calculated by the following expression.

$$VLti = (1+\alpha\beta Tis)/(1+\alpha Tis) \qquad \ldots (\text{Expression 4})$$

The target value filter 14 outputs the internal target value VLti to the PID control part 15.

The PID control part 15 calculates an amount of operation MV using an equation of the existing PID control on the basis of the internal target value VLti, the PID value (the proportional band Pb, the integral time Ti, and the differential time Td), and the measured value PV. The PID control part 15 outputs the amount of operation MV to the actuator 20.

By performing such processes, the temperature control device 10 can implement temperature control using the two-degree-of-freedom PID control.

Fig. 2 is a graph illustrating temperature control characteristics when a temperature control technique according to the first embodiment of the invention is used. In Fig. 2, the horizontal axis represents time, and the vertical axis represents temperature. Tt denotes a target temperature. T02 and T03 denote initial values of the internal target value. In Fig. 2, a thick dotted line indicates a temperature characteristic of a method according to the related art. The method according to the related art is a method of determining the filter coefficients $\alpha$ and $\beta$ using linear characteristics of the device without using the method of determining the filter coefficients $\alpha$ and $\beta$ according to the invention. A two-dot chain line indicates an internal target value in the related art. A thick solid line indicates temperature characteristics in the method according to the invention. A thin solid line indicates the internal target value in the invention.

As illustrated in Fig. 2, by using the method of setting the filter coefficients $\alpha$ and $\beta$ according to the invention, it is possible to suppress overshooting at the time of response to a target value and to shorten a settling time. On the other hand, in the method according to the related art, overshooting occurs and a settling time extends.

In this way, by using the configuration and routine according to this embodiment, it is possible to suppress overshooting at the time of response to a target value and to shorten a settling time. Although not illustrated in the drawing, it is possible to suppress overshooting at the time of response to a target value and to shorten a settling time, even when the initial values of the internal target value are different.

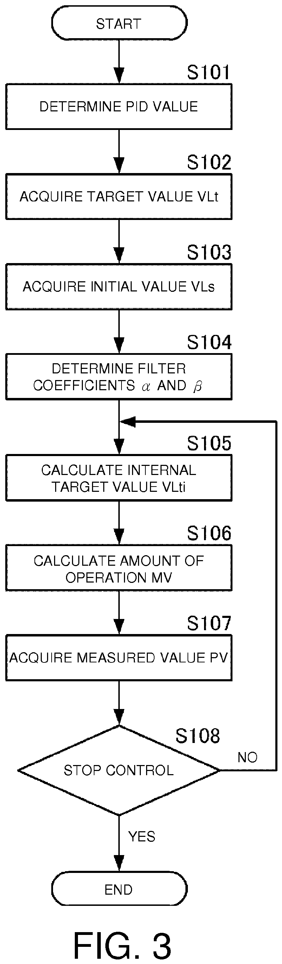

An example in which two-degree-of-freedom PID control using the filter coefficients $\alpha$ and $\beta$ is performed by a plurality of functional parts has been described above, but such processes may be defined in a program and stored in a storage part (such as a magnetic storage medium or a memory) and the program may be read and executed by an information processing device (hardware such as a CPU). Fig. 3 is a flowchart illustrating a temperature control method according to the first embodiment of the invention. Specific processing details of the processes are the same as described above and description thereof will not be repeated.

First, the information processing device determines a PID value by automatic tuning or the like (S101).

The information processing device determines the filter coefficients $\alpha$ and $\beta$ using the target value VLt, the initial value VLs, and the PID value (S104). More specifically, the information processing device determines the filter coefficients $\alpha$ and $\beta$ using at least the target value VLt, the initial value VLs, the proportional band Pb, and the integral time Ti.

The information processing device acquires the target value VLt (S102). The information processing device acquires the initial value VLs (S103).

The information processing device calculates the internal target value VLti using the target value VLt and the filter coefficients $\alpha$ and $\beta$ (S105). The information processing device calculates the amount of operation MV using the internal target value VLti, the measured value PV, and the PID value.

The information processing device acquires the measured value PV (S107), and feeds back the measured value to Step S105 when a control stop condition is not satisfied (NO in S108). Accordingly, the PID control is performed and a process of tracking the target value is performed. The information processing device stops PID control when the control stop condition is satisfied (YES in S108).

By performing such processes, it is possible to suppress overshooting at the time of response to a target value and to shorten a settling time.

The PID control has been exemplified in the above description, but the invention may be applied to substantial PI control. That is, setting may be performed such that an influence of a differential term of the PID control is cancelled.

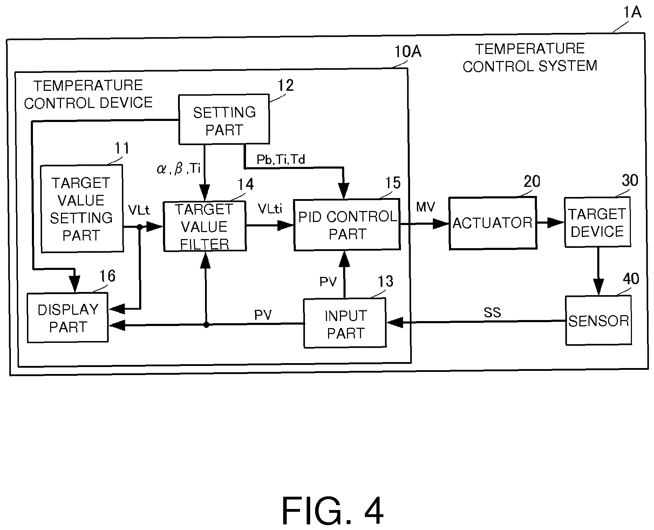

A temperature control device according to a second embodiment of the invention will be described below with reference to the drawing. Fig. 4 is a functional block diagram of a temperature control system including the temperature control device according to the second embodiment of the invention.

As illustrated in Fig. 4, the temperature control device 10A of the temperature control system 1A according to the second embodiment is different from the temperature control device 10 according to the first embodiment, in that a display part 16 is provided. The other elements of the temperature control device 10A are the same as in the temperature control device 10 and description of the same elements will not be repeated.

The temperature control device 10A includes a display part 16. The display part 16 includes, for example, a liquid crystal display.

The display part 16 is connected to the target value setting part 11 and the input part 13. The display part 16 displays a target value VLt and a measured value PV.

The display part 16 is connected to the setting part 12. The display part 16 displays a set PID value and set filter coefficients $\alpha$ and $\beta$.

By employing this configuration, a difference between the target value VLt and the measured value PV and a temperature characteristic curve illustrated in Fig. 2 can be displayed and an operator can easily recognize them. An operator can easily recognize the PID value and the filter coefficients $\alpha$ and $\beta$.

REFERENCE NUMERALS

| 1, 1A | TEMPERATURE CONTROL SYSTEM |
|---|---|
| 10, 10A | TEMPERATURE CONTROL DEVICE |
| 12 | SETTING PART |
| 11 | TARGET VALUE SETTING PART |
| 13 | INPUT PART |
| 14 | TARGET VALUE FILTER |
| 15 | PID CONTROL PART |
| 16 | DISPLAY PART |
| 20 | ACTUATOR |
| 30 | TARGET DEVICE |
| 40 | SENSOR |
| Pb | PROPORTIONAL BAND |
| Ti | INTEGRAL TIME |
| Td | DIFFERENTIAL TIME |
| Tt | TARGET TEMPERATURE |
| T02, T03 | INITIAL VALUE |
| a, $\beta$ | FILTER COEFFICIENT |
| VLti | INTERNAL TARGET VALUE |
| VLt | TARGET VALUE |
| MV | OPERATION |
| PV | MEASURED VALUE |
| SS | MEASUREMENT DATA |
| S101~S108 | STEP |

**Claims**

1. A control device (10, 10A) comprising:

   a setting part (12) configured to set a PID value including a proportional band (Pb) and an integral time (Ti) and filter coefficients $\alpha$ and $\beta$ of two-degree-of-freedom PID control;
   the control device (10, 10A) being **characterized in** further comprising:

   a target value filter (14) configured to calculate an internal target value (VLti) from a target value (VLt) of control using the filter coefficients $\alpha$ and $\beta$ set by the setting part (12), wherein the internal target value (VLti) is calculated by the following expression:

   $$VLti = (1+\alpha\beta Tis)/(1+\alpha Tis);$$

   and
   a PID control part (15) configured to calculate an amount of operation (MV) for control using the PID value set by the setting part (12) and the internal target value (VLti) calculated by the target value filter (14) as input, wherein the setting part (12) sets the filter coefficients $\alpha$ and $\beta$ using the target value (VLt), an initial value (VLs) at a start time of control of the target value (VLt), and the proportional band (Pb), wherein the setting part (12) sets the filter coefficient $\alpha$ using the target value (VLt), the initial value (VLs), the proportional band (Pb), and the integral time (Ti), and sets the filter coefficient $\beta$ using the target value (VLt), the initial value (VLs), and a ratio of the proportional band (Pb) and the integral time (Ti).

2. The control device (10, 10A) according to claim 1, wherein the setting part (12) sets the filter coefficient $\beta$ additionally using a system gain.

3. The control device (10, 10A) according to any one of claims 1 to 2, wherein the setting part (12) sets the PID value from a result of automatic tuning using a limit cycle method.

4. A control method of a control device (10, 10A), comprising:

   a step of setting, by a setting part (12), a PID value including a proportional band (Pb) and an integral time (Ti) and filter coefficients $\alpha$ and $\beta$ of two-degree-of-freedom PID control;
   the control method being **characterized in** further comprising:

   a step of calculating, by a target value filter (14), an internal target value (VLti) from a target value (VLt) of control using the filter coefficients $\alpha$ and $\beta$ set by the setting part (12), wherein the internal target value (VLti) is calculated by the following expression:

   $$VLti = (1+\alpha\beta Tis)/(1+\alpha Tis);$$

   and
   a step of calculating, by a PID control part (15), an amount of operation (MV) for control using the PID value set by the setting part (12) and the internal target value (VLti) calculated by the target value filter (14) as input, wherein the step of setting the filter coefficients includes setting the filter coefficients $\alpha$ and $\beta$ using the target value (VLt) and an initial value (VLs) at a start time of control of the target value (VLt), wherein the setting part (12) sets the filter coefficient $\alpha$ using the target value (VLt), the initial value (VLs), the proportional band (Pb), and the integral time (Ti), and sets the filter coefficient $\beta$ using the target value (VLt), the initial value (VLs), and a ratio of the proportional band (Pb) and the integral time (Ti).

5. A control program comprising instructions which, when the program is executed by a control device (10, 10A) cause the control device (10,10A) to perform:

   a process (S101-S104) of setting, by a setting part (12), a PID value including a proportional band (Pb) and an integral time (Ti) and filter coefficients $\alpha$ and $\beta$ of two-degree-of-freedom PID control;
   the control program being **characterized in** further causing the control device (10, 10A) to perform:

a process (S105) of calculating, by a target value filter (14), an internal target value (VLti) from a target value (VLt) of control using the filter coefficients $\alpha$ and $\beta$ set by the setting part (12), wherein the internal target value (VLti) is calculated by the following expression:

$$VLti = (1+\alpha\beta Tis)/(1+\alpha Tis);$$

and

a process (S106) of calculating, by a PID control part (15), an amount of operation (MV) for control using the PID value set by the setting part (12) and the internal target value (VLti) calculated by the target value filter (14) as input,

wherein the process (S104) of setting the filter coefficients includes setting the filter coefficients $\alpha$ and $\beta$ using the target value (VLt) and an initial value (VLs) at a start time of control of the target value (VLt), wherein the setting part (12) sets the filter coefficient $\alpha$ using the target value (VLt), the initial value (VLs), the proportional band (Pb), and the integral time (Ti), and sets the filter coefficient $\beta$ using the target value (VLt), the initial value (VLs), and a ratio of the proportional band (Pb) and the integral time (Ti).

**Patentansprüche**

1.  Steuervorrichtung (10, 10A), umfassend:

    ein Einstellteil (12), das konfiguriert ist, um einen PID-Wert einzustellen, der ein Proportionalband (Pb) und eine Integralzeit (Ti) und Filterkoeffizienten $\alpha$ und $\beta$ einer PID-Steuerung mit zwei Freiheitsgraden einschließt;
    wobei die Steuervorrichtung (10, 10A) **dadurch gekennzeichnet ist, dass** sie ferner umfasst:
    einen Zielwertfilter (14), der konfiguriert ist, einen internen Zielwert (VLti) aus einem Zielwert (VLt) der Steuerung unter Verwendung der Filterkoeffizienten $\alpha$ und $\beta$, eingestellt durch das Einstellteil (12), zu berechnen, wobei der interne Zielwert (VLti) durch den folgenden Ausdruck berechnet wird:

    $$VLti = (1+\alpha\beta Tis)/(1+\alpha Tis);$$

    und

    ein PID-Steuerungsteil (15), das konfiguriert ist, um einen Betriebsbetrag (MV) für Steuerung unter Verwendung des PID-Werts, eingestellt durch das Einstellteil (12), und des internen Zielwertes (VLti), zu berechnen, berechnet durch den Zielwertfilter (14) als Eingabe, wobei das Einstellteil (12) die Filterkoeffizienten $\alpha$ und $\beta$ unter Verwendung des Zielwertes (VLt), eines Anfangswerts (VLs) zu einem Steuer-Startzeitpunkt des Zielwertes (VLt) und des Proportionalbandes (Pb) einstellt, wobei das Einstellteil (12) den Filterkoeffizienten $\alpha$ unter Verwendung des Zielwertes (VLt), des Anfangswertes (VLs), des Proportionalbandes (Pb) und der Integralzeit (Ti) einstellt und den Filterkoeffizienten $\beta$ unter Verwendung des Zielwertes (VLt), des Anfangswertes (VLs) und eines Verhältnisses des Proportionalbandes (Pb) und der Integralzeit (Ti) einstellt.

2.  Steuervorrichtung (10, 10A) nach Anspruch 1, wobei das Einstellteil (12) den Filterkoeffizienten $\beta$ zusätzlich unter Verwendung einer Systemverstärkung einstellt.

3.  Steuervorrichtung (10, 10A) nach einem der Ansprüche 1 bis 2, wobei das Einstellteil (12) den PID-Wert aus einem Ergebnis der automatischen Abstimmung unter Verwendung eines Grenzzyklusverfahrens einstellt.

4.  Steuerverfahren von einer Steuervorrichtung (10, 10A), umfassend:

    einen Schritt des Einstellens, durch ein Einstellteil (12), eines PID-Wertes, einschließlich eines Proportionalbands (Pb) und eine Integralzeit (Ti) und Filterkoeffizienten $\alpha$ und $\beta$ einer PID-Steuerung mit zwei Freiheitsgraden;
    wobei das Steuerverfahren **dadurch gekennzeichnet ist, dass** es ferner umfasst:

    einen Schritt zum Berechnen eines internen Zielwerts (VLti) durch einen Zielwertfilter (14) aus einem Zielwert (VLt) der Steuerung unter Verwendung der Filterkoeffizienten $\alpha$ und $\beta$, eingestellt durch das Einstellteil (12), wobei der interne Zielwert (VLti) durch den folgenden Ausdruck berechnet wird:

$$VLti = (1+\alpha\beta Tis)/(1+\alpha Tis);$$

und

einen Schritt zum Berechnen, durch ein PID-Steuerungsteil (15), eines Betriebsbetrags (MV) zur Steuerung unter Verwendung des PID-Werts, eingestellt durch das Einstellteil (12) und des internen Zielwerts (VLti), berechnet durch den Zielwertfilter (14) als Eingabe,

wobei der Einstellschritt der Filterkoeffizienten Einstellen der Filterkoeffizienten α und β unter Verwendung des Zielwerts (VLt) und eines Anfangswerts (VLs) zu einem Steuer-Startzeitpunkt des Zielwerts (VLt) einschließt,

wobei das Einstellteil (12) den Filterkoeffizienten α unter Verwendung des Zielwertes (VLt), des Anfangswertes (VLs), des Proportionalbandes (Pb) und der Integralzeit (Ti) einstellt und den Filterkoeffizienten β unter Verwendung des Zielwertes (VLt), des Anfangswertes (VLs) und eines Verhältnisses des Proportionalbandes (Pb) und der Integralzeit (Ti) einstellt.

5.  Steuerprogramm, umfassend Anweisungen, die, wenn ein Programm ausgeführt wird durch eine Steuervorrichtung (10, 10A) die Steuervorrichtung (10, 10A) veranlasst, um auszuführen:

einen Vorgang (S101-S104) des Einstellens, durch ein Einstellteil (12), eines PID-Wertes, der ein Proportionalband (Pb) und eine Integralzeit (Ti) und Filterkoeffizienten α und β einer PID-Steuerung mit zwei Freiheitsgraden einschließt,

wobei das Steuerprogramm **dadurch gekennzeichnet ist, dass** es ferner die Steuervorrichtung (10, 10A) veranlasst, auszuführen

ein Verfahren (S105) des Berechnens, durch einen Zielwertfilter (14), eines internen Zielwertes (VLti) aus einem Zielwert (VLt) der Steuerung unter Verwendung der Filterkoeffizienten α und β, eingestellt durch das Einstellteil (12), wobei der interne Zielwert (VLti) durch den folgenden Ausdruck berechnet wird:

$$VLti = (1+\alpha\beta Tis)/(1+\alpha Tis);$$

und

ein Verfahren (S106) zum Berechnen, durch ein PID-Steuerungsteil (15), eines Betriebsbetrags (MV) zur Steuerung unter Verwendung des PID-Werts, eingestellt durch das Einstellteil (12) und des internen Zielwerts (VLti), berechnet durch den Zielwertfilter (14) als Eingabe,

wobei das Verfahren (S104) des Einstellens der Filterkoeffizienten das Einstellen der Filterkoeffizienten α und β unter Verwendung des Zielwerts (VLt) und eines Anfangswerts (VLs) zu einem Steuer-Startzeitpunkt des Zielwerts (VLt) einschließt,

wobei das Einstellteil (12) den Filterkoeffizienten α unter Verwendung des Zielwertes (VLt), des Anfangswertes (VLs), des Proportionalbandes (Pb) und der Integralzeit (Ti) einstellt und den Filterkoeffizienten β unter Verwendung des Zielwertes (VLt), des Anfangswertes (VLs) und eines Verhältnisses des Proportionalbandes (Pb) und der Integralzeit (Ti) einstellt.

**Revendications**

1.  Dispositif de commande (10, 10A) comprenant :

une partie de réglage (12) configurée pour régler une valeur de PID incluant une bande proportionnelle (Pb) et un temps intégral (Ti) et des coefficients de filtre α et β de commande de PID avec deux degrés de liberté ;

le dispositif de commande (10, 10A) étant **caractérisé en ce qu'**il comprend en outre :

un filtre de valeur cible (14) configuré pour calculer une valeur cible interne (VLti) à partir d'une valeur cible (VLt) de commande en utilisant les coefficients de filtre α et β réglés par la partie de réglage (12), dans lequel la valeur cible interne (VLti) est calculée selon l'expression suivante :

$$\mathtt{VLti\ =\ (1+\alpha\beta Tis)/(1+\alpha Tis)\ ;}$$

et

une partie de commande de PID (15) configurée pour calculer une quantité d'actionnement (MV) pour une commande en utilisant la valeur de PID réglée par la partie de réglage (12) et la valeur cible interne (VLti) calculée par le filtre de valeur cible (14) en tant qu'entrées, dans lequel la partie de réglage (12) règle les coefficients de filtre $\alpha$ et $\beta$ en utilisant la valeur cible (VLt), une valeur initiale (VLs) à un temps de début de commande de la valeur cible (VLt), et la bande proportionnelle (Pb), dans lequel la partie de réglage (12) règle le coefficient de filtre $\alpha$ en utilisant la valeur cible (VLt), la valeur initiale (VLs), la bande proportionnelle (Pb), et le temps intégral (Ti) et règle le coefficient de filtre $\beta$ en utilisant la valeur cible (VLt), la valeur initiale (VLs), et un rapport de la bande proportionnelle (Pb) et du temps intégral (Ti).

2. Dispositif de commande (10, 10A) selon la revendication 1, dans lequel la partie de réglage (12) règle le coefficient de filtre $\beta$ en plus en utilisant un gain de système.

3. Dispositif de commande (10, 10A) selon la revendication 1 ou 2, dans lequel la partie de réglage (12) règle la valeur de PID à partir d'un résultat d'ajustement automatique en utilisant un procédé de cycle de limite.

4. Procédé de commande d'un dispositif de commande (10, 10A) comprenant :

une étape de réglage, par une partie de réglage (12), d'une valeur de PID incluant une bande proportionnelle (Pb) et un temps intégral (Ti) et des coefficients de filtre $\alpha$ et $\beta$ de commande de PID avec deux degrés de liberté ; le procédé de commande étant **caractérisé en ce qu'**il comprend en outre : une étape de calcul, par un filtre de valeur cible (14), d'une valeur cible interne (VLti) à partir d'une valeur cible (VLt) de commande en utilisant les coefficients de filtre $\alpha$ et $\beta$ réglés par la partie de réglage (12), dans lequel la valeur cible interne (VLti) est calculée selon l'expression suivante :

$$\mathtt{VLti\ =\ (1+\alpha\beta Tis)/(1+\alpha Tis)\ ;}$$

et

une étape de calcul, par une partie de commande de PID (15), d'une quantité d'actionnement (MV) pour une commande en utilisant la valeur de PID réglée par la partie de réglage (12) et la valeur cible interne (VLti) calculée par le filtre de valeur cible (14) en tant qu'entrées, dans lequel l'étape du réglage des coefficients de filtre inclut le réglage des coefficients de filtre $\alpha$ et $\beta$ en utilisant la valeur cible (VLt) et une valeur initiale (VLs) à un temps de début de commande de la valeur cible (VLt), dans lequel la partie de réglage (12) règle le coefficient de filtre $\alpha$ en utilisant la valeur cible (VLt), la valeur initiale (VLs), la bande proportionnelle (Pb), et le temps intégral (Ti) et règle le coefficient de filtre $\beta$ en utilisant la valeur cible (VLt), la valeur initiale (VLs), et un rapport de la bande proportionnelle (Pb) et du temps intégral (Ti).

5. Programme de commande comprenant des instructions qui, lorsque le programme est exécuté par un dispositif de commande (10, 10A), amènent le dispositif de commande (10, 10A) à réaliser :

un processus (S101-S104) de réglage, par une partie de réglage (12), d'une valeur de PID incluant une bande proportionnelle (Pb) et un temps intégral (Ti) et des coefficients de filtre $\alpha$ et $\beta$ de commande de PID avec deux degrés de liberté ; le programme de commande étant **caractérisé en ce qu'**il amène en outre le dispositif de commande (10, 10A) à réaliser : un processus (S105) de calcul, par un filtre de valeur cible (14), d'une valeur cible interne (VLti) à partir d'une valeur cible (VLt) de commande en utilisant les coefficients de filtre $\alpha$ et $\beta$ réglés par la partie de réglage (12), dans lequel la valeur cible interne (VLti) est calculée selon l'expression suivante :

$$\mathrm{VLti} = (1+\alpha\beta\mathrm{Tis})/(1+\alpha\mathrm{Tis}) \ ;$$

et

un processus (S106) de calcul, par une partie de commande de PID (15), d'une quantité d'actionnement (MV) pour une commande en utilisant la valeur de PID réglée par la partie de réglage (12) et la valeur cible interne (VLti) calculée par le filtre de valeur cible (14) en tant qu'entrées,

dans lequel le processus (S104) de réglage des coefficients de filtre inclut le réglage des coefficients de filtre $\alpha$ et $\beta$ en utilisant la valeur cible (VLt) et une valeur initiale (VLs) à un temps de début de commande de la valeur cible (VLt),

dans lequel la partie de réglage (12) règle le coefficient de filtre $\alpha$ en utilisant la valeur cible (VLt), la valeur initiale (VLs), la bande proportionnelle (Pb), et le temps intégral (Ti) et règle le coefficient de filtre $\beta$ en utilisant la valeur cible (VLt), la valeur initiale (VLs), et un rapport de la bande proportionnelle (Pb) et du temps intégral (Ti).

FIG. 1

FIG. 2

FIG. 3

TEMPERATURE CONTROL SYSTEM 1A

TEMPERATURE CONTROL DEVICE 10A

12 SETTING PART

11 TARGET VALUE SETTING PART

α, β, Ti

Pb, Ti, Td

14 TARGET VALUE FILTER

VLt

VLti

15 PID CONTROL PART

MV

20 ACTUATOR

30 TARGET DEVICE

16 DISPLAY PART

PV

13 INPUT PART

PV

SS

40 SENSOR

FIG. 4

**EP 3 349 074 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014121853 A1

**Non-patent literature cited in the description**

- System Control Information Library PID control. *Nobuhide Suda,* 98-101